# EUROPEAN PATENT APPLICATION

(11) **EP 0 993 091 A2**
(43) Date of publication of application: **12.04.2000**
(21) Application number: 99307858.3
(22) Date of filing: 06.10.1999
(51) Int. Cl.: H02H 1/06

(54) **Circuit breaker**

(30) Priority: 06.10.1998 JP 28378698
(71) Applicant: HITACHI, LTD., Chiyoda-ku, Tokyo (JP); Hitachi Techno Engineering Co., Ltd., Adachi-ku, Tokyo (JP)
(72) Inventor: Hayakawa, Hideki, Kitakanbara-gun, Niigata-ken (JP); Sato, Eietsu, Kitakanbara-gun, Niigata-ken (JP)
(74) Representative: Calderbank, Thomas Roger

(57) **Abstract**

In a circuit breaker, a program is provided for shifting a microcomputer (400) to the low power consumption mode after the trip signal is output. Then, the current supplied to the microcomputer is suppressed and the current supplied to the trip gear (3) is increased. In the circuit breaker, the number of turns of the coil windings can be reduced for a smaller size.

## Description

The present invention relates to a circuit breaker used for protecting an electric path.

A conventional electronic circuit breaker having a microcomputer is so configured that the current flowing in the main circuit is detected by a current transformer (CT), and when the microcomputer monitoring the current value decides on an overcurrent, a trip signal is output, whereby a thyristor is turned on to activate a trip gear to trip off the circuit breaker. In the conventional control system, the microcomputer is in operation and supplied with a current also at the time of driving the trip gear, and therefore a lesser amount of current is supplied to the trip gear.

The object of the present invention is to provide a circuit breaker comprising a small-sized trip gear.

In the conventional control system, the current supplied to the trip gear is small in amount. For securing an operation ampere turn required for tripping, therefore, many turns of thick windings of large diameter are required. Thus, the coil winding space is unavoidably increased thereby leading to the problem of an increased outline of the trip gear.

In order to achieve the above-mentioned object, according to this invention, there is provided a circuit breaker comprising an overcurrent detection circuit having a microcomputer and a trip gear driven by the output of said overcurrent detection circuit, characterized in that said microcomputer has the function of reducing the power consumption, and said overcurrent detection circuit is configured to increase the current supplied to said trip gear by setting said microcomputer in low power consumption mode at the time of driving said trip gear.

According to the present invention, a circuit breaker having a small-sized trip gear can be provided.

Fig. 1 is a block diagram of a circuit breaker according to an embodiment of the invention.

Fig. 2 is a sectional view showing the structure of a circuit breaker according to an embodiment of the invention.

Fig. 3 is an electrical connection diagram of the power circuit and the trip circuit of a conventional electronic circuit breaker.

Fig. 4 is an electrical connection diagram of the power circuit and the trip circuit of a circuit breaker according to an embodiment of the present invention.

Fig. 5 is a flowchart of a circuit breaker according to an embodiment of the present invention.

Fig. 6 is a timing chart of a circuit breaker according to an embodiment of the present invention.

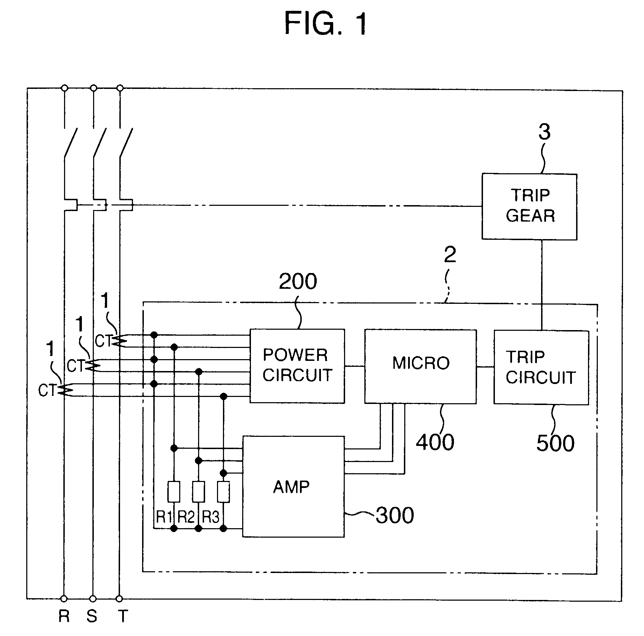

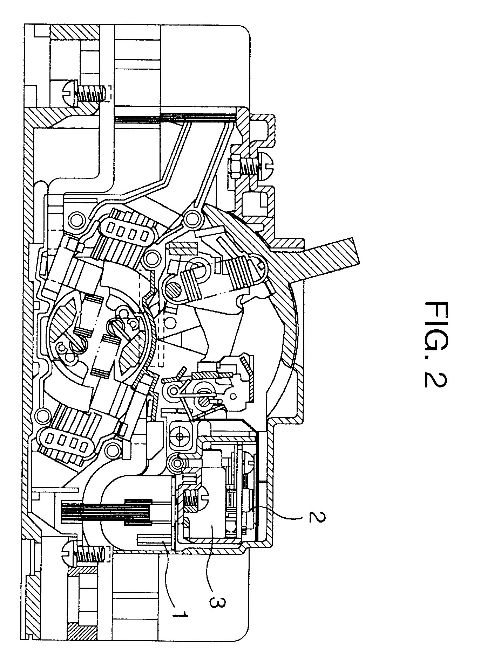

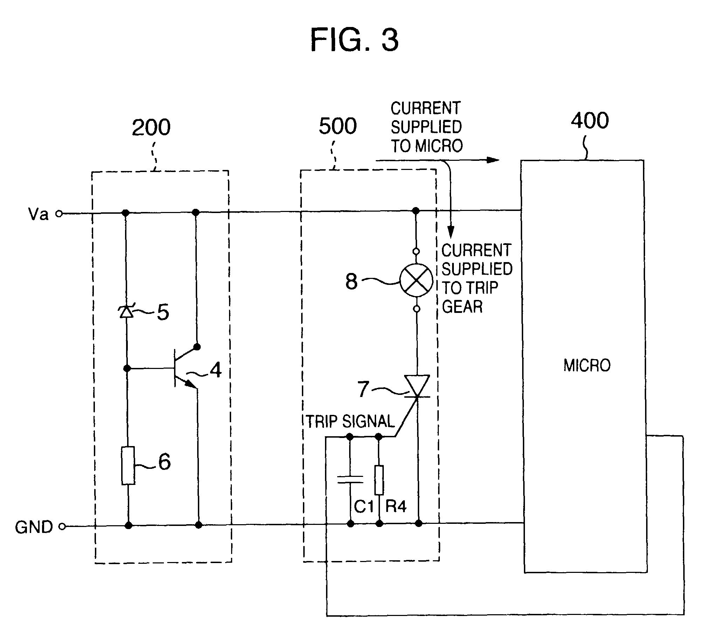

An embodiment of the present invention will be explained with reference to Figs. 1, 2 and Figs. 4 to 6. In this embodiment, the invention is applied to an electronic circuit breaker. A block diagram of this circuit breaker is shown in Fig. 1, and a structure in Fig. 2. The secondary current of a current transformer (hereinafter referred to as CT) installed for each of R, S, T phases supplies the current to a power circuit 200, an amplifier circuit 300, a microcomputer 400, a trip circuit 500 and a trip gear 3. The current flowing in the main circuit is converted into a current signal by the CT 1, converted into a voltage by detection resistors R1, R2, R3, amplified by an amplifier circuit 300 and input to a microcomputer 400. The power circuit 200, the amplifier circuit 300, the microcomputer 400, the trip circuit 500, the detection circuits R1, R2, R3 are packaged on a printed board 2. The microcomputer 400 monitors the magnitude of the voltage and when an operating condition is met, outputs a trip signal, so that the circuit breaker is tripped by the trip gear 3. The power circuit 200 and the trip circuit 500 are shown in Fig. 3. The power circuit 200 is a constant voltage circuit including a transistor 4, a zener diode 5 and a resistor 6, and is so configured that when in operation, the thyristor 7 is turned on by a trip signal from the microcomputer 400 to apply a voltage to and energize the coil 8 of the trip gear 3.

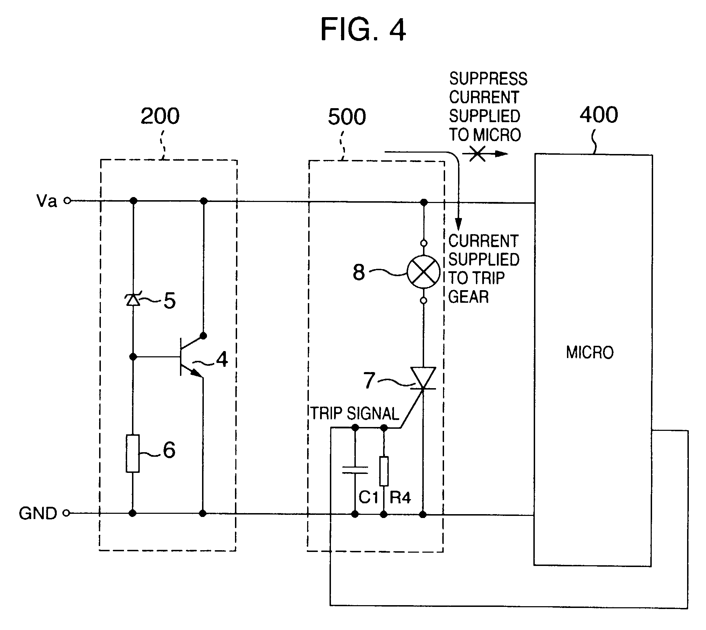

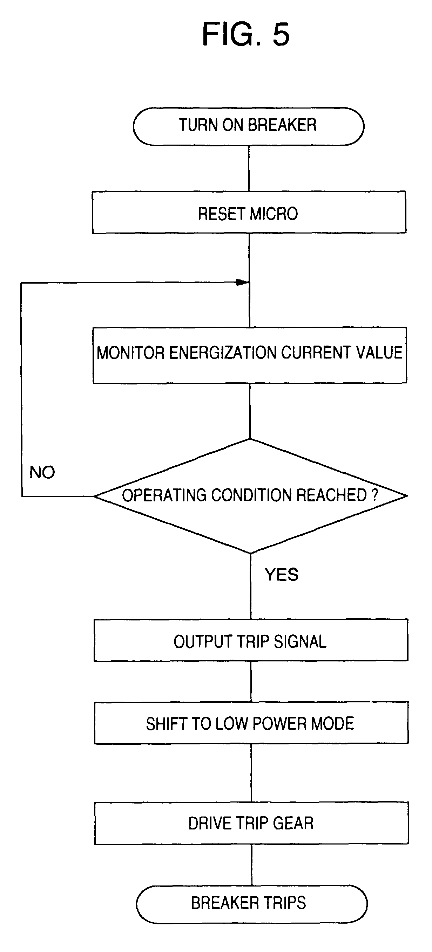

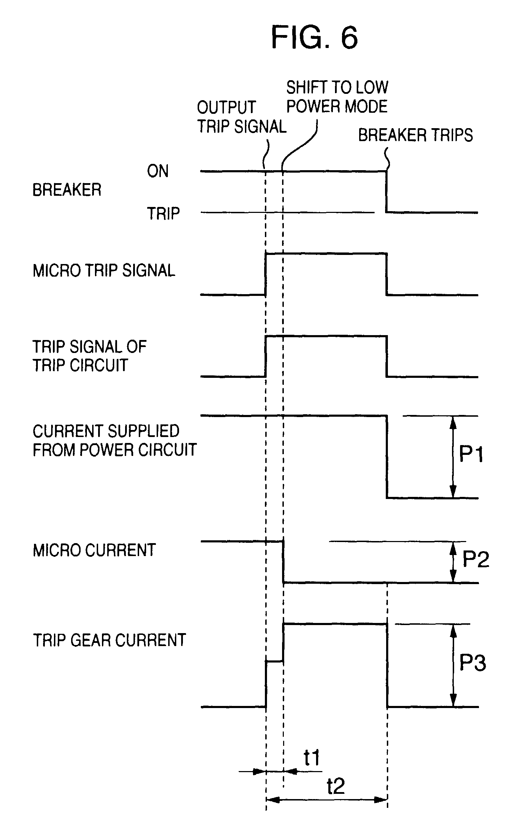

According to this embodiment, the program for the microcomputer 400 is different from that for the conventional electronic circuit breaker. The microcomputer 400 has a specification of low power consumption mode. The microcomputer 400 has a program for shifting to the lower power consumption mode after the trip signal is output, and therefore can suppress the current supplied to the microcomputer 400 while increasing the current supplied to the trip gear 3. (Refer to Fig. 4) The low power consumption mode of the microcomputer 400 is of three types including the sleep mode, the software standby mode and the hardware standby mode. The maximum value of the current consumption of the microcomputer 400 according to this embodiment is 400 mA in normal operation, but is suppressed to 20 mA in sleep mode and further can be suppressed to 5 µA in software standby mode and hardware standby mode. Fig. 5 shows a flowchart of this embodiment. When a current begins to flow in the main circuit with the circuit breaker switched on, the power supply is established and the microcomputer 400 is reset into normal operation. The microcomputer 400 monitors the energization current, and when the condition for the break operation comes to be met, a trip signal is output to shift to the low power consumption mode. The trip circuit 500 is activated by the trip signal, the trip gear 3 is driven and the breaker trips. The circuit is cut off with the microcomputer 400 shifted to the low power consumption mode. When the breaker is switched on again, the microcomputer 400 is reset into normal operation. Fig. 6 shows a timing chart of the current supplied to the trip gear 3. The trip signal is output from the microcomputer 400 and supplied to the trip circuit 500. Then, the trip signal is output from the trip circuit 500 and a current flows in the coil 8 of the trip gear 3. Upon the lapse of time t1, the microcomputer 400 shifts to the low power consumption mode so that the current supplied to the microcomputer 400 is suppressed. Even after the energization current of the main circuit reaches the condition for the break operation, the total amount P1 of the current supplied from the CT 1 through the power circuit 200 to the amplifier circuit 300, the microcomputer 400, the trip circuit 500 and the trip gear 3 remains constant. When the current P2 supplied to the microcomputer 400 is suppressed substantially to zero, therefore, the current supplied to the trip gear 3 increases up to P3, a value required for operation. By the way, the relation holds that P2 + P3 > P1 > P3 > P2. Upon the lapse of time t2, the operation of the trip gear 3 is completed, and the breaker enters the trip mode. The time t1 is the length of time from the output of the trip signal to the shift of the microcomputer to the low power consumption mode, and is about several µs. The time t2 is the length of time from the output of the trip signal to the trip of the breaker, and is about 20 to 30 ms. Also, in this embodiment, P1 is about 75 mA, P2 is about 40 mA, and P3 is about 50 mA.

## Claims

1. A circuit breaker comprising an overcurrent detection circuit having a microcomputer (400) and a trip gear (3) driven by the output of said overcurrent detection circuit, characterized in that said microcomputer has the function of reducing the power consumption, and said overcurrent detection circuit is configured to set said microcomputer in low power consumption mode and increase the current supplied to said trip gear at the time of driving said trip gear.
